# EUROPEAN PATENT APPLICATION

(11) **EP 4 653 695 A1**
(43) Date of publication of application: **26.11.2025**
(21) Application number: 24177341.5
(22) Date of filing: 22.05.2024
(51) Int. Cl.: F03D 7/02, F03D 17/00, F03D 7/04

(54) **METHOD FOR MITIGATING A MISALIGNMENT OF A NACELLE OF A WIND TURBINE AND WIND TURBINE**

(71) Applicant: Nordex Energy SE & Co. KG, 22419 Hamburg (DE)
(72) Inventor: BARZ, Kay, 22419 Hamburg (DE); BETKO, Eduard, 22419 Hamburg (DE)
(74) Representative: Epping - Hermann - Fischer

(57) **Abstract**

According to an embodiment, the method for mitigating a misalignment of a nacelle (4) of a wind turbine (100) comprises a step of receiving first information (11) which is representative of a first wind related quantity (TI_1). The first information has been determined with the help of a primary wind sensor (1). In a further step, second information (12) is received which is representative of a second wind related quantity (TI_2). The second information has been determined with the help of a secondary wind sensor (2). In a further step, third information (13) is determined depending on the first and the second information. The third information is representative of a misalignment (δ_m) of the primary wind sensor with respect to the nacelle. Then, if the primary wind sensor is misaligned, a measure is executed to cause a reduction of the misalignment of the nacelle resulting from the misalignment of the primary wind sensor.

## Description

The present disclosure relates to a method for mitigating a misalignment of a nacelle of a wind turbine. Furthermore, the present disclosure relates to a computer program, a computer-readable data carrier, a controller, a control system and a wind turbine.

Wind turbines are widely known and are used to convert wind energy into electrical energy. The efficiency of the operation of the wind turbine is an important task. The correct position, i.e. the correct yaw angle, of the nacelle of the wind turbine with respect to the incoming wind influences the efficiency of the wind turbine. Optimal operation is usually achieved when the rotor plane is orientated perpendicular to the wind direction.

One object to be achieved is to provide an improved method for mitigating a misalignment of a nacelle of a wind turbine with respect to a wind direction. Further objects to be achieved are to provide a computer program, a computer-readable data carrier, a controller, a control system and a wind turbine with which the method is executable.

First, the method for mitigating a misalignment of a nacelle of a wind turbine with respect to a wind direction is specified.

According to an embodiment, the method comprises a step of receiving first information which is representative of a first wind related quantity. The first information has been determined with the help of a primary wind sensor. In a further step, second information is received which is representative of a second wind related quantity. The second information has been determined with the help of a secondary wind sensor. In a further step, third information is determined depending on the first and the second information. The third information is representative of a misalignment of the primary wind sensor with respect to the nacelle. Based on the information received from the primary wind sensor the yawing of the nacelle can be controlled. Then, if the primary wind sensor is misaligned, a measure is executed to cause a reduction of the misalignment of the nacelle resulting from the misalignment of the primary wind sensor.

The present invention is, inter alia, based on the recognition that a static misalignment of the nacelle with respect to the wind direction can origin from a misalignment of a wind sensor (primary wind sensor) which is used for determining the yaw angle of the nacelle. It was found out that the misalignment of this primary wind sensor can be determined with help of a secondary wind sensor. When the misalignment of the primary wind sensor is known, a suitable measure can be executed in order to reduce the misalignment of the nacelle.

Here and in the following, misalignment of the nacelle means the static misalignment thereof if not stated otherwise.

The method for mitigating a misalignment of a nacelle specified herein is, in particular, a computer-implemented method, i.e. is performed by a computer or a processor.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The first and the second information are both representative of a wind related quantity, namely a first and a second wind related quantity. However, the first and the second information or the first and the second wind related quantity, respectively, have been determined depending on measurements taken by different wind sensors, namely either the primary wind sensor or the secondary wind sensor. In other words: the first and the second information are representative of measurements taken by the primary wind sensor or secondary wind sensor, respectively. The first and the second wind related quantity are, in particular, the same physical quantity, for example the wind speed or the turbulence intensity or the wind direction or a combination thereof.

The primary wind sensor may be configured to measure the wind direction of the wind hitting the primary wind sensor. For example, during operation of the wind turbine, the yaw angle, in particular the yaw angle setpoint, of the nacelle is set depending on the measurements taken by the primary wind sensor and being indicative for the measured wind direction.

The third information is determined depending on the first and the second information, for example by comparing the first and the second information. The third information is determined such that it is representative of a misalignment of the primary wind sensor with respect to the nacelle. This means that the third information is representative of whether the primary wind sensor is misaligned or not, and, optionally, of the value of misalignment, e.g. the angle of misalignment. By way of example, if the value of misalignment exceeds a defined threshold, herein also called "first threshold", it is defined in the third information that the primary wind sensor is misaligned, and, if the value of misalignment is below the first threshold, it is defined in the third information that the primary wind sensor is not misaligned.

The measure is executed, if the third information is representative of the primary wind sensor being misaligned. The measure itself may depend on the third information. For example, if the third information is also representative of the value of misalignment of the primary wind sensor, the measure may depend on the value of misalignment of the primary wind sensor.

The execution of the measure is configured to cause a reduction of the misalignment of the nacelle. A couple of measures are possible in order to achieve this. For example, the measure may be the generation of an electrical signal, which, when received by a user interface, informs an operator about the misalignment of the primary wind sensor. The user interface could be a display which indicates the value of misalignment to the operator. The operator can then take action to reduce the misalignment of the nacelle, for example by manually realigning the primary wind sensor or by manually changing parameters in the wind turbine control in order to compensate for the misalignment of the primary wind sensor. Additionally or alternatively, the measure could be or could comprise an automatic change of parameters in the wind turbine control in order to compensate for the misalignment of the primary wind sensor.

According to a further embodiment, the first wind related quantity represents a first turbulence intensity. The second wind related quantity represents a second turbulence intensity. The turbulence intensity is defined as a time interval's standard deviation of the wind speed divided by the average value of the wind speed in this time interval.

According to a further embodiment, the first information and the second information are captured by yawing the nacelle to a plurality of yaw angles. Accordingly, the first information, the second information and the third information are determined for each of the plurality of yaw angles.

According to a further embodiment, the measure comprises an action to reduce the misalignment of the primary wind sensor with respect to the nacelle. For example, the measure comprises the generation of an electrical signal, which, when received by a user interface, indicates to an operator that a manual realignment of the primary wind sensor should be performed. Additionally or alternatively, the measure may comprise the manual realignment of the primary wind sensor. The manual alignment may then be done using a Laser tool.

According to a further embodiment, the measure comprises a correction of a yaw angle setpoint for the nacelle. As indicated above, the yaw angle setpoint may be determined depending on measurements taken by the primary wind sensor. The measure may comprises determining an offset yaw angle depending on the third information. A corrected yaw angle setpoint is then determined, for example, as the sum of the yaw angle setpoint determined depending on the measurements of the primary wind sensor and the offset yaw angle. In this way, the misalignment of the nacelle can be reduced without realignment of the primary wind sensor, for example.

For instance, the measure is dependent on the third information. If the third information is representative of the value of misalignment of the primary wind sensor to exceed a defined threshold, herein also called "second threshold", the measure comprises executing the action to reduce the misalignment of the primary wind sensor. If, however, the third information is representative of the value of misalignment of the primary wind sensor to be below the second threshold, the measure comprises only the correction of the yaw angle setpoint. The second threshold is, in particular, larger than the first threshold. Thus, according to a preferred embodiment, in case the value of misalignment of the primary wind sensor is below the first threshold, no measure is taken as no correction is required. In case the value of misalignment of the primary wind sensor is between the first threshold and the second threshold, the preferred measure includes correcting the yaw angle setpoint. In case the value of misalignment of the primary wind sensor is greater than second threshold, the measure includes realignment of the primary wind sensor.

The following procedure may be executed: The method is executed for a first time by receiving the first and the second information and determining the third information. If the third information is representative of the primary wind sensor being misaligned and of the value of the misalignment to exceed the second threshold, the measure comprises the action to reduce the misalignment of the primary wind sensor. After this measure has been executed, the whole method is executed again, i.e. the first and the second information are received again and the third information is determined again. If the redetermined third information is representative of the primary wind sensor still being misaligned but of the value of misalignment of the primary wind sensor to be below the second threshold but above first threshold, the measure only comprises the correction of the yaw angle setpoint.

According to a further embodiment, determining the third information comprises determining fourth information which is representative of a difference between the first and the second wind related quantities. The third information can then be determined depending on the fourth information, e.g. using a known correlation between the difference between the wind related quantities and the misalignment of the primary wind sensor. The fourth information is, in particular, determined depending on the first and the second information. For example, the fourth information is representative of the difference between the first and the second turbulence intensities. The difference between the turbulence intensities is correlated with the misalignment of the primary wind sensor.

According to a further embodiment, determining the third information comprises using reference information. The reference information is determined at a reference location. The reference location could be a location away from the wind farm of the wind turbine or it could be a further wind turbine of the same wind farm or it could be a wind turbine of another wind farm or it could be a LIDAR (Light Detection And Ranging) or a met mast and so on.

For example, the reference information is representative of the above-mentioned correlation between the difference between the wind related quantities and the misalignment. The reference information may be representative of a lookup table. The look-up table may assign a pair of first and second information or a certain difference between the wind related quantities to a certain misalignment value. Thus, by comparing the first and the second information with the reference information, the misalignment of the primary wind sensor may be determined. The reference information may, in particular, be determined with help of a reference wind turbine or prototype wind turbine, respectively. The actual misalignment of the primary wind sensor may be determined using a met mast.

According to a further embodiment, the third information is determined using a trained machine learning model. For example, the trained machine learning model is trained on data of one or more reference turbines or prototype turbines, respectively. This machine learning model may be trained to deliver the third information depending on the first and the second information. In other words, this procedure can be done on one or more wind turbines with a predetermined sensor alignment. Typical sensor misalignments can be in the range of about ±5°. The behavior of the difference between the wind related quantities to a certain misalignment value can be trained to the model, so that the method described herein allows the inverse operation on a wind turbine having the same sensor types.

According to a further embodiment, the method further comprises the step of receiving, besides the first and the second information, further information. The further information is representative of measurements taken by one or more further sensors of the wind turbine. The further sensors are, in particular, different from the primary and secondary wind sensors. Accordingly, the further information is representative for other physical quantities than the first and the second wind related quantities.

According to a further embodiment, the third information is determined depending on the first, the second and the further information by using the trained machine learning model. That is, the trained machine learning model is trained to deliver the third information depending on the first, the second and the further information. By using further information for training and using the machine learning model, a more accurate prediction of the third information or the misalignment of the primary wind sensor, respectively, can be achieved. For example, spurious correlations can be suppressed when the machine learning model is trained on more than the first and the second information.

According to a further embodiment, the further information is representative of at least one of: a pitch angle of at least one rotor blade of the wind turbine, a rotational speed of a rotor of the wind turbine, an acceleration of the nacelle. All the quantities may be determined depending on measurements.

Next, the computer program, the computer-readable data carrier and the controller are specified.

According to an embodiment, the computer program comprises instructions which, when the program is executed by a controller or computer, respectively, cause the controller or computer to carry out the method for mitigating a misalignment of a nacelle of a wind turbine according to any one of the embodiments described herein.

According to an embodiment, the computer-readable data carrier has the computer program stored thereon.

According to an embodiment, the controller comprises means for executing the method for mitigating a misalignment of a nacelle of a wind turbine according to any one of the embodiments described herein. That is, the controller is configured such that it executes the method. The controller may comprise at least one processor and/or at least one plc (programmable logic controller). The controller may be part of the wind turbine, e.g. it may be the turbine controller, or may be an external device which is, for example, several km away from the wind turbine, like a computer in a control station. For example, the controller is configured to communicate with the wind turbine or components thereof via a wire or wirelessly.

Next, the control system is specified.

According to an embodiment, the control system comprises the controller as specified herein, a primary wind sensor and a secondary wind sensor. The primary and the secondary wind sensor are both electrically coupled to the controller in order to provide the controller with measurement signals.

The control system is, in particular, configured to perform the method according to any one of the embodiments described herein. Therefore, all features disclosed for the method are also disclosed for the control system and vice versa.

When the controller receives the measurement signals from the primary and secondary wind sensor, the controller may determine the first and the second information depending on the measurements of the two wind sensors. The controller may further be configured to determine a yaw angle setpoint for the nacelle depending on measurements taken with the primary wind sensor.

According to a further embodiment, the primary wind sensor and the secondary wind sensor operate on different principles. For example, the primary wind sensor is an ultrasonic anemometer, and the secondary wind sensor is another type of anemometer, e.g. a cup anemometer. For example, the primary wind sensor is configured to measure the wind direction and the wind speed. Furthermore, the primary wind sensor may be a speed sensor and a cup anemometer, physically located, independently, on the nacelle and operating independently. The secondary wind sensor is configured, for example, to only measure the wind speed. It is also possible that the secondary wind sensor is a wind vane which is only configured to determine the wind direction but not the wind speed.

According to a further embodiment, the control system further comprises at least one of a pitch angle sensor for determining a pitch angle of a rotor blade of the wind turbine, a sensor for determining a rotational speed of a rotor of the wind turbine and a sensor for determining an acceleration of the nacelle. The sensor(s) may be coupled to the controller.

The sensor for determining the pitch angle may be an incremental encoder. Likewise, the sensor for determining the rotational speed of the rotor may be an incremental encoder. The sensor for determining an acceleration of the nacelle could also be an encoder, which determines the change of the yaw angle of the nacelle in a time-resolved manner. The further information mentioned above may be determined depending on the measurements provided by these sensors.

Next, the wind turbine is specified.

According to an embodiment, the wind turbine comprises a nacelle, a rotor with at least one rotor blade, wherein the rotor is mounted on the nacelle, a yaw actuation system configured to change a yaw angle of the nacelle and the control system according to any of the embodiments described herein. The controller of the control system is coupled to the yaw actuation system in order to set the yaw angle of the nacelle depending on a yaw angle setpoint provided by the controller and determined depending on a wind direction measured with the help of the primary wind sensor.

Since the wind turbine comprises the control system as specified herein, all features disclosed for the control system are also disclosed for the wind turbine. For example, the wind turbine is configured such that, when the controller executes the method for mitigating a misalignment of a nacelle, the controller generates a corrected yaw angle setpoint depending on the determined third information. When the yaw actuation system receives the corrected yaw angle setpoint, it sets the yaw angle of the nacelle according to the corrected yaw angle setpoint which results in a reduction of the misalignment of the nacelle with respect to the wind direction compared to the case where the method for mitigating the misalignment is not executed.

According to a further embodiment, the primary wind sensor and the secondary wind sensor are both mounted on the nacelle. The primary and the secondary wind sensor are, in particular, mounted at different locations of the wind turbine. For example, the primary and the secondary wind sensor are both mounted on a top side of the nacelle opposite to the tower of the wind turbine. For example, during operation, the primary and the secondary wind sensor are located behind the rotor of the wind turbine when seen along the wind direction.

According to a further embodiment, the primary and the secondary wind sensor are arranged next to each other when viewed along the rotational axis of the rotor. Particularly, the primary and the secondary wind sensor are arranged next to each other on the nacelle.

Hereinafter, the method for mitigating a misalignment of a nacelle of a wind turbine, the controller, the control system and the wind turbine will be explained in more detail with reference to the drawings on the basis of exemplary embodiments. The accompanying figures are included to provide a further understanding. The features and embodiments described in connection with the figures can also be combined with one another according to further embodiments, even if not all such combinations are explicitly described. Furthermore, the embodiments described in connection with the figures can alternatively or additionally have further features according to the description in the general part.

In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figure 2 shows a perspective view of the wind turbine of Figure 1,
Figure 3 shows a perspective view of a part of an exemplary embodiment of a nacelle,
Figure 4 shows an exemplary embodiment of reference information,
Figures 5 to 7 show different exemplary embodiments of the method for mitigating a misalignment of a nacelle of a wind turbine with respect to a wind direction.

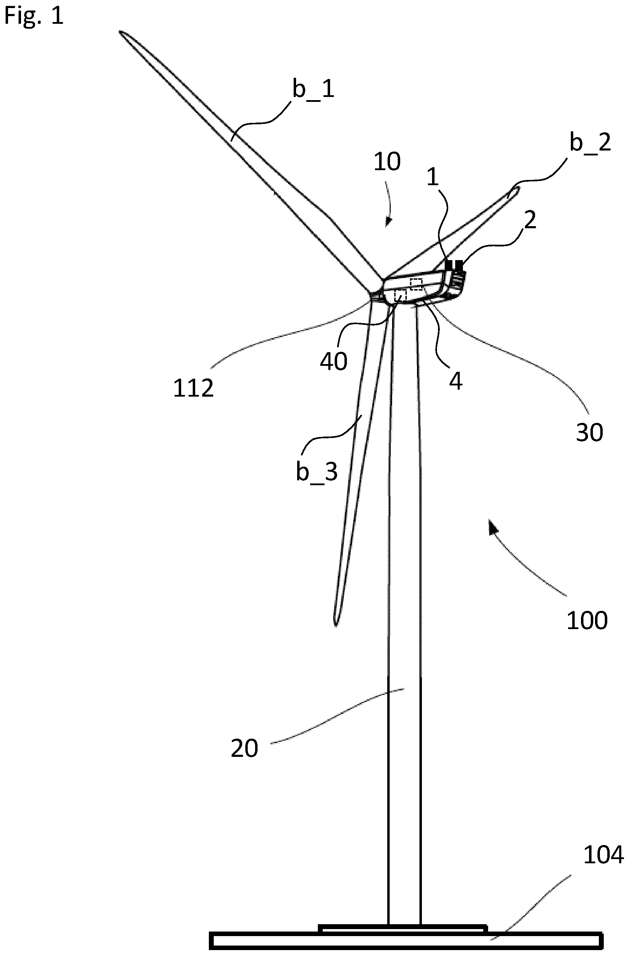

Figure 1 shows an exemplary embodiment of a wind turbine 100 which comprises a tower 20. The tower 20 is fixed to the ground by means of a foundation 104. A nacelle 4 is rotatably mounted at one end of the tower 20, opposite to the ground. The nacelle 4 comprises, for example, a generator which is coupled to a rotor 10 via a gearbox (not shown). The rotor 10 comprises three (wind turbine) rotor blades b_1, b_2, b_3 which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 4 has to be rotated into the wind. An optimal yaw angle of the nacelle 4 is when the rotor plane of the rotor 10 is perpendicular to the wind direction. The nacelle 4 can be rotated into the wind by a yaw actuation system 40. The yaw actuation system 40 comprises drives (not shown). In order to control and operate the drives, the wind turbine 100 comprises a control system. The control system comprises a controller 30 which is coupled to the yaw actuation system 40. During operation, the controller 30 provides the yaw actuation system 40 with a yaw angle setpoint. The yaw actuation system 40 accordingly sets the position, i.e. the yaw angle, of the nacelle 4 to the yaw angle setpoint by operating the drives.

The control system further comprises a primary wind sensor 1 and a secondary wind sensor 2 which are mounted on the top side of the nacelle 4 next to each other and behind the rotor 10. The primary wind sensor 1 and the secondary wind sensor 2 are coupled to the controller 30 in order to provide the controller 30 with measurement signals. The primary wind sensor 1 is, for example, an ultrasonic anemometer and is configured to measure the wind direction and wind speed of the wind acting on the wind turbine 100. Depending on the measurement signals of the primary wind sensor 1, the controller 30 determines the yaw angle setpoint for the yaw actuation system 40. The secondary wind sensor 2 is, for example, a cup anemometer which is configured to measure the wind speed.

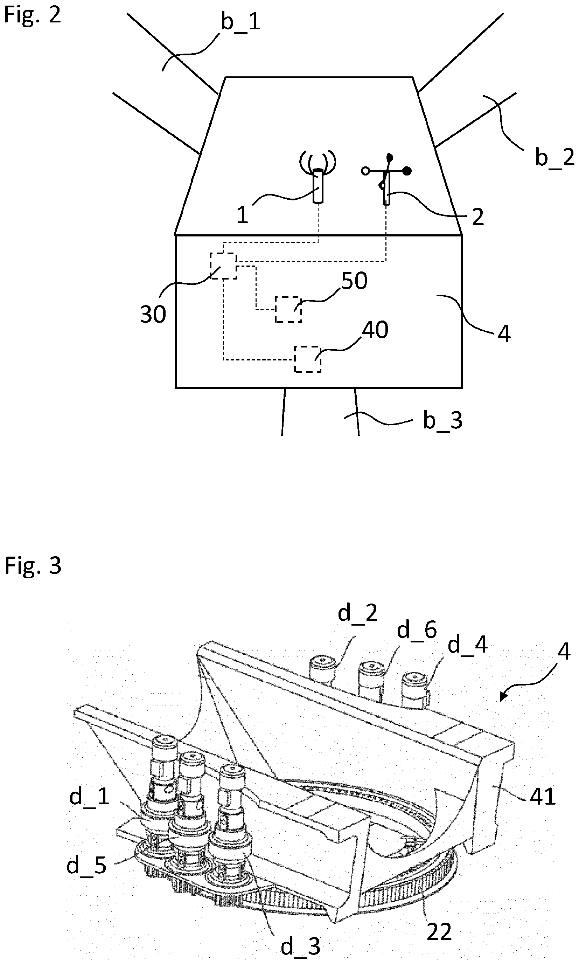

Figure 2 shows a perspective view of the wind turbine 100 of Figure 1. The viewing direction is from diagonally above onto the top side of the nacelle 4. As can be seen here, the two wind sensors 1, 2 are arranged next to each other on the top side of the nacelle 4. The control system can additionally comprise one or more sensors 50 like, for instance a pitch angle sensor for determining a pitch angle of a rotor blade b_1, b_2, b_3 of the wind turbine 100, a sensor for determining a rotational speed of a rotor (10) of the wind turbine (100), a sensor for determining an acceleration of the nacelle (4).

Figure 3 shows a perspective view of a part of the nacelle 4 of Figures 1 and 2. For better illustration, only the carrier 41 of the nacelle is shown. The carrier 41 carries the nacelle housing (not shown) in which, for example, the controller 30 is arranged. The carrier 41 is rotatable together with the nacelle 4. In order to rotate the carrier 41, six drives d_1 to d_6 are mounted on the carrier 41. These drives d_1 to d_6 mesh with a yaw bearing 22. The yaw bearing 22 is fixed with respect to, for example, the tower 20. The carrier 41 is rotated when the drives d_1 to d_6 rotate. The drives d_1 to d_6 are part of the yaw actuation system 40.

As mentioned above, the yaw actuation system 40 operates the drives d_1 to d_6 depending on a yaw angle setpoint which is determined by the controller 30. Whether this results in the optimal position or yaw angle, respectively, of the nacelle 4 with respect to the wind direction depends, inter alia, on the alignment of the primary wind sensor 1. If the primary wind sensor 1 is misaligned with respect to the nacelle 4, also the nacelle 4 may be misaligned with respect to the wind direction, i.e. it might not be in the optimal position. In order to detect or determine such a misalignment of the primary wind sensor 1, measurements from the primary 1 and secondary 2 wind sensor can be used.

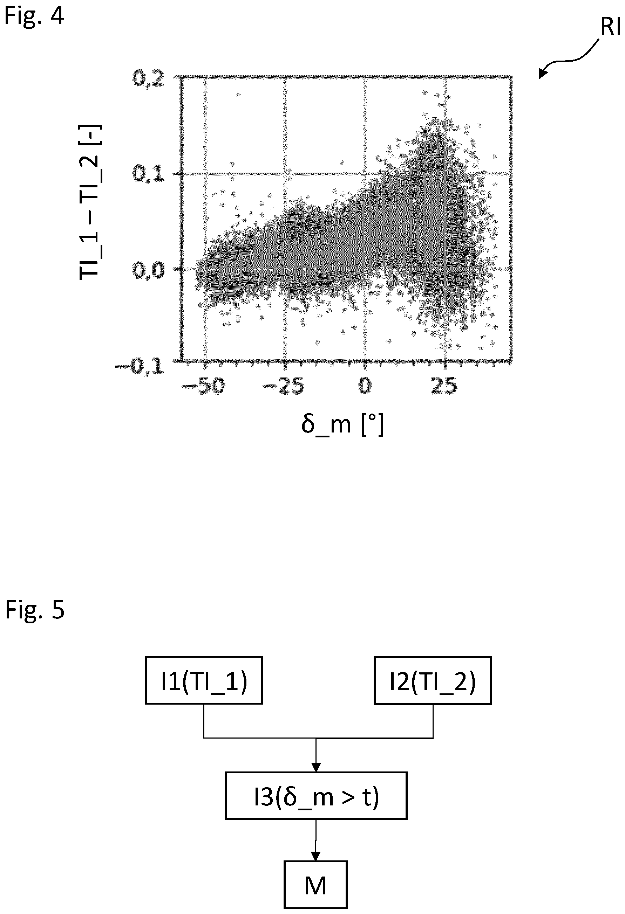

Figure 4 shows reference information RI of a reference wind turbine, at a reference location, which is designed like the wind turbine 100 described before, i.e. equipped with equivalent primary and secondary wind sensors. The reference information is representative of the difference between the turbulence intensities TI_1 and TI_2 and the associated misalignment δ_m of the primary wind sensor. The turbulence intensity TI_1 is the one determined with the help of the primary wind sensor, the turbulence intensity TI_2 is the one determined with the help of the secondary wind sensor. The turbulence intensity is defined as the standard deviation of the measured wind speed in a certain time interval divided by the average value of the wind speed in the time interval. The misalignment δ_m of the primary wind sensor 1 is determined, for example, with the help of a met mast.

As can be seen in Figure 4, there is a correlation between the turbulence intensity difference TI_1 - TI_2 and the misalignment δ_m of the primary wind sensor 1. Therefore, the reference information RI can be used to determine a misalignment of the primary wind sensor of the wind turbine of Figure 1 depending the turbulence intensities measured with the help of the primary wind sensor 1 and the secondary wind sensor 2 of Figure 1. For example, linear regression of the reference information RI of Figure 4 can be used for this purpose.

The present invention allows to mitigate a potential misalignment of the nacelle of the wind turbine 100 with respect to the wind direction caused by a misalignment of the primary wind sensor 1 of the wind turbine 100. Exemplary embodiments of the method for mitigating the misalignment are described in connections with Figures 5 to 7. The method according to the exemplary embodiments can be carried out by the controller 30. Carrying out the method can be caused by a computer program that is executed by the controller 30. The computer program can be stored on a computer-readable data carrier. Thus, Figures 5 to 7 also represent the computer program and the computer-readable data carrier.

In the exemplary embodiment of Figure 5, first information I1 and second information I2 are received, e.g. provided, in first steps. The first information I1 is representative of a first wind related quantity TI_1 and is determined, e.g. measured, with the help of the primary wind sensor 1. The first wind related quantity TI_1 is, for example, the turbulence intensity. The second information I2 is representative of a second wind related quantity TI_2 and is determined, e.g. measured, with the help of the secondary wind sensor 2. The first and the second wind related quantities TI_1 and TI_2 are, for example, the same physical quantities. Accordingly, the second wind related quantity TI_2 may also be the turbulence intensity. The wind speed that is determined with the help of the primary wind sensor 1 and that is used to receive the first information I1 and the wind speed that is determined with the help of the secondary wind sensor 2 and that is used to receive the second information I2 can be the same wind speed or can be different to a certain extent, since the measurements can be performed with different sensor types as explained in connection with Figure 1 and at different positions on the nacelle 4. This effect can add up to the qualitative difference the described method makes use of. The first information (I1) and the second information (I1) are preferably captured by yawing the nacelle (4) to a plurality of yaw angles.

In a next step, third information I3 is determined depending on the first information I1 and the second information I2. The third information I3 is representative of a misalignment δ_m of the primary wind sensor 1 with respect to the nacelle 4.

If the value of misalignment δ_m or angle of misalignment δ_m, respectively, exceeds a first threshold t, the primary wind sensor 1 is assumed to be misaligned and, accordingly, the third information I3 is determined to be representative of the primary wind sensor 1 being misaligned. In this case, a measure M is executed in a further step. The measure M is executed to cause a reduction of the misalignment of the nacelle 4 with respect to the wind direction resulting from the misalignment δ_m of the primary wind sensor 1. The measure M may comprise a manual realignment of the primary wind sensor 1 and/or the correction of the yaw angle setpoint for the nacelle 4 according to which the yaw actuation system 40 is operated. The kind of measure M which is executed may depend on the third information 13, e.g. on the value of misalignment δ_m.

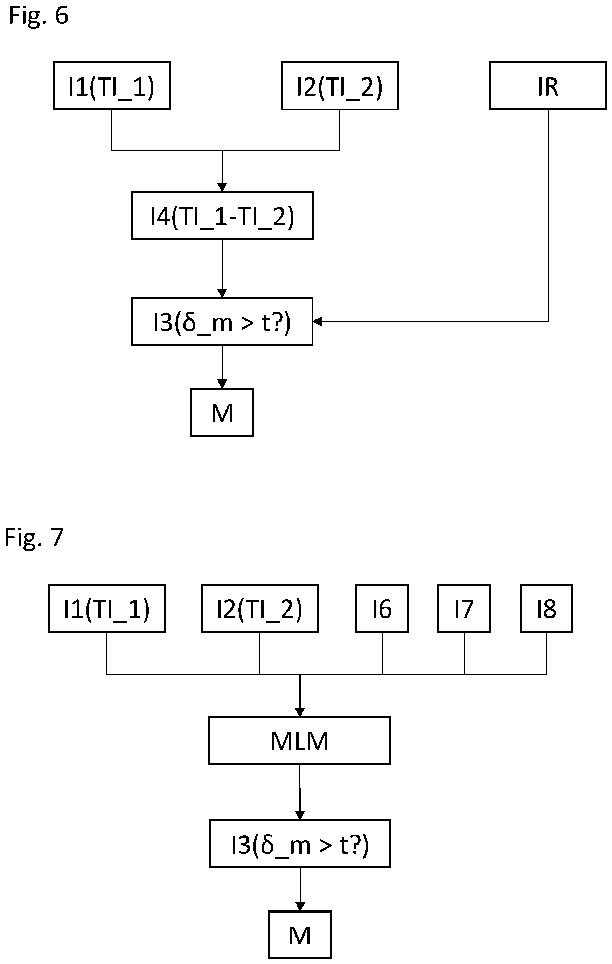

The exemplary embodiment of the method according to Figure 6 is similar to the one of Figure 5. In addition to the steps described in connection with the exemplary embodiment of Figure 5, fourth information I4 is determined depending on the first information I1 and the second information I2 in a further step. The fourth information I4 is representative of the difference between the wind related quantities TI_1 and TI_2 measured or determined with the help of the primary wind sensor 1 and the secondary wind sensor 2. The fourth information I4 is then used to determine the third information 13. For this purpose, in a further step the reference information IR as described in connection with Figure 4 may be provided and used, for example. Then, the measure M is again executed.

In the exemplary embodiment of the method according to Figure 7, further information I6, I7 and I8 are provided or received in further steps in addition to the first information I1 and the second information I2. For example, the sixth information I6 is representative of the pitch angles of the rotor blades b_1, b_2, b_3 of the wind turbine 100. The seventh information I7 may be representative of the rotational speed of the rotor 10. The eighth information I8 may be representative of the acceleration of the nacelle 4. For determining the further information I6, I7 and I8, further sensors 50 may be used as indicated in Figure 2. The information I1, I2, I6, I7 and I8 are then fed into a trained machine learning model MLM which delivers, as an output, the third information I3 being representative of the misalignment δ_m of the primary wind sensor 1. Depending on this determined third information I3, the measure M is then executed.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: primary wind sensor
- 2: secondary wind sensor
- 4: nacelle
- 10: rotor
- 20: tower
- 22: yaw bearing
- 30: controller
- 40: yaw actuation system
- 41: carrier
- 50: sensor
- 100: wind turbine
- 104: foundation
- 112: hub
- b_1 to b_3: rotor blade
- d_1 to d_6: drive

- I1: first information
- I2: second information
- I3: third information
- I4: fourth information
- I6: six information
- I7: seventh information
- I8: eighth information
- M: measure

- TI_1: first wind related quantity
- TI_2: second wind related quantity
- δ_m: value of misalignment / angle of misalignment
- t: first threshold
- IR: reference information

## Claims

1. A method for mitigating a misalignment of a nacelle (4) of a wind turbine (100) with respect to a wind direction, wherein the method comprises:
- receiving first information (I1), representative of a first wind related quantity (TI_1) and determined with the help of a primary wind sensor (1);
- receiving second information (I2), representative of a second wind related quantity (TI_2) and determined with the help of a secondary wind sensor (2);
- determining third information (I3), depending on the first (I1) and the second (I2) information, wherein the third information (I3) is representative of a misalignment (δ_m) of the primary wind sensor (1) with respect to the nacelle (4); and, if the primary wind sensor (1) is misaligned,
- executing a measure (M) to cause a reduction of the misalignment of the nacelle (4) resulting from the misalignment (δ_m) of the primary wind sensor (1).

2. The method according to claim 1, wherein
- the first wind related quantity (TI_1) represents a first turbulence intensity and the second wind related quantity (TI_2) represents a second turbulence intensity.

3. The method according to claim 1 to 2, wherein
- the first information (I1) and the second information (I1) are captured by yawing the nacelle (4) to a plurality of yaw angles.

4. The method according to any one of the preceding claims, wherein
- the measure (M) comprises executing an action to reduce the misalignment of the primary wind sensor (1) with respect to the nacelle (4).

5. The method according to any one of the preceding claims, wherein
- the measure (M) comprises correction of a yaw angle setpoint for the nacelle (4).

6. The method according to any one of the preceding claims, wherein
- determining the third information (I3) comprises determining fourth information (I4) representative of a difference between the first wind related quantity (TI_1) and the second wind related quantity (TI_2).

7. The method according to any one of the preceding claims, wherein
- determining the third information (I3) comprises using reference information (IR) determined at a reference location.

8. The method according to any one of the preceding claims, wherein
- the third information (I3) is determined using a trained machine learning model (MLM).

9. The method according to claim 8, further comprising
- receiving, besides the first information (I1) and the second information (I2), further information (I6, I7, I8) representative of measurements taken by one or more further sensors of the wind turbine (100),
- the third information (I3) is determined depending on the first information (I1), the second information (I2) and the further information (I6, I7, I8) by using the trained machine learning model (MLM),
- the further information (I6, I7, I8) is representative of at least one of: a pitch angle of at least one rotor blade (b_i) of the wind turbine (100), a rotational speed of a rotor (10) of the wind turbine (100), an acceleration of the nacelle (4).

10. A computer program comprising instructions which, when the program is executed by a controller (30), cause the controller (30) to carry out the method of any one of claims 1 to 9.

11. A control system comprising
- a controller (30) comprising means for executing the method according to any one of claims 1 to 9,
- a primary wind sensor (1) and a secondary wind sensor (2), wherein
- the primary wind sensor (1) and the secondary wind sensor (2) are both coupled to the controller (30) in order to provide the controller (30) with measurement signals.

12. The control system according to claim 11, wherein
- the primary wind sensor (1) and the secondary wind sensor (2) operate on different principles.

13. The control system according to any one of claims 11 to 12, further comprising at least one of
- a pitch angle sensor for determining a pitch angle of a rotor blade (b_i) of the wind turbine (100),
- a sensor for determining a rotational speed of a rotor (10) of the wind turbine (100),
- a sensor for determining an acceleration of the nacelle (4) .

14. A wind turbine (100) comprising
- a nacelle (4),
- a rotor (10) with at least one rotor blade (b_i), the rotor (10) being mounted on the nacelle (4),
- a yaw actuation system (40) configured to change a yaw angle of the nacelle (4),
- the control system according to any one of claims 11 to 13, wherein
- the controller (30) of the control system is coupled to the yaw actuation system (40) to set the yaw angle of the nacelle (4) depending on a yaw angle setpoint provided by the controller (30) and determined depending on a wind direction measured with the help of a primary wind sensor (1).

15. The wind turbine (100) according to claim 14, wherein
- the primary wind sensor (1) and the secondary wind sensor (2) are both mounted on the nacelle (4),
- when viewed along the rotational axis of the rotor (10), the primary (1) and the secondary (2) wind sensor are arranged next to each other.
